# EUROPÄISCHE PATENTANMELDUNG

(11) **EP 2 280 561 A1**
(43) Veröffentlichungstag der Anmeldung: **02.02.2011**
(21) Anmeldenummer: 10177486.7
(22) Anmeldetag: 07.09.2000
(51) Int. Cl.: H04R 25/00, B29C 45/16

(54) **Verfahren zur Herstellung von Hörgeräten und Hörgerät**

(62) Teilanmeldung aus: 09165610.8
(71) Anmelder: PHONAK AG, 8712 Stäfa (CH)
(72) Erfinder: Niccolai, Richard, 8610, Uster (CH)
(74) Vertreter: Troesch Scheidegger Werner AG

(57) **Zusammenfassung**

Es wird vorgeschlagen, ein aus mehreren Teilen nachhaltig assembliertes Hörgerät so zu fertigen, dass mindestens zwei der Teile aus unterschiedlichen Materialien durch Zwei- oder Mehrkomponenten-Spritzgiesstechnik gemeinsam gefertigt werden, insbesondere wobei das Hörgerät ein Hörgerät mit einem Gehäuse und mit auf der Aussenseite des Gehäuses vorgegebenen Flächenbereichen ist, und wobei ein erstes der mindestens zwei Teile das Gehäuse ist und weitere der mindestens zwei Teile die Flächenbereiche sind. Weiter wird eine Verwendung eines Zwei- oder Mehrkomponenten Spritzgiessverfahrens zur Einsparung mindestens eines Assemblierungsschrittes bei einem Verfahren zur Herstellung von Hörgeräten offenbart, indem mindestens zwei Hörgeräteteile aus unterschiedlichen Materialien dadurch erstellt und nachhaltig assembliert werden, dass sie aus unterschiedlichen Materialkomponenten durch Zwei- oder Mehrkomponenten-Spritzgiesstechnik bereits vereint erstellt und dadurch assembliert werden.

## Beschreibung

Die vorliegende Erfindung betrifft Verfahren, Verwendungen und Hörgeräte nach dem Oberbegriff der unabhängigen Ansprüche.

Zwei- oder Mehrkomponenten-Spritzgiessverfahren sind aus der Kunststoff-Verarbeitungstechnik bekannt. Es kann beispielsweise verwiesen werden auf Ch. Jaroschek "Das Mehrkomponenten-Spritzgiessverfahren" Swiss Plastics 19 (1997) Nr. 12 oder auf U. Stenglin "Hart/Weich-Verbindungen und anwendungsbezogene Modifizierbarkeit von TPE-S (SEBS/SEPS)", Swiss Plastics 20 (1998) Nr. 3. Darin sind die Vorteile von Zwei- oder Mehrkomponenten-Spritzgiessverfahren erläutert, nämlich bezüglich Werkzeugkosten, Personalkosten, Maschinenkosten und Materialkosten. Die erwähnten Verfahren werden grundsätzlich in Sandwich-Spritzgiessverfahren und in Overmoulding-Verfahren kategorisiert. Im vorliegenden Fall interessiert, wenn auch nicht ausschliesslich so doch primär, das erwähnte Overmoulding-Verfahren. Dabei wird ein Teil aus einer ersten Materialkomponente gefertigt und mindestens abschnittsweise mit einer zweiten, unterschiedlichen Materialkomponente überspritzt, womit an den ersten Teil der Zweite aus unterschiedlichem Material, aufgebaut wird. Es lassen sich alle spritzfähigen Thermoplast-Werkstoffe, insbesondere auch für das Overmoulding-Verfahren, einsetzen, aber auch ganz gezielt nicht verbindbare weitere Materialien.

Selbstverständlich sind auch bei der Hörgeräte-Produktion die oben erwähnten Kosten wichtige Produktionsfaktoren. Hinzu kommt aber bei der Hörgeräte-Fertigung grundsätzlich das Platzproblem, indem es ein permanentes Bedürfnis der erwähnten Branche ist, möglichst platzsparend zu bauen.

Es ist Aufgabe der vorliegenden Erfindung, ein Fertigungsverfahren vorzuschlagen, und entsprechend ein daraus resultierendes Hörgerät, welches Verfahren eine signifikante Erhöhung der Baudichte, an Hörgeräten erlaubt.

Zu diesem Zweck wird am erwähnten Verfahren vorgeschlagen, mindestens zwei der am Hörgerät zu assemblierenden Teile in Zwei- oder Mehrkomponenten-Spritzgiesstechnik zu fertigen und gemeinsam zu assemblieren. Selbstverständlich ist der dabei sich gegebenenfalls einstellende Vorteil der Reduktion obgenannter Kosten hoch willkommen, wesentlicher ist aber, dass durch Einsatz des erwähnten Verfahrens das für die Hörgeräte-Bautechnik essentielle Kriterium, die Erhöhung der Komponentendichte pro cm³ zur Verfügung stehenden Platzes erreicht wird.

Wird gemäss einer Ausführungsform des Verfahrens, als einer der Teile, mindestens eine Partie des Hörgeräte-Gehäuses eingesetzt, also beispielsweise die eine Schale eines zweischaligen Gehäuses, so können daran mit dem Zwei- oder Mehrkomponenten-Spritzgiessverfahren weitere Wirkungs-Teile, insbesondere Dichtungen, z.B. zum dichten Vereinigen mit der zweiten Gehäuseschale und/oder schlagdämpfende Aufnehmungen für einzubauende, heikle Gerätekomponente und/oder weitere aktive Hörgeräte-Komponenten, wie akustische Leiter, direkt angebaut werden. Grundsätzlich ergibt sich dadurch die Möglichkeit, Verbindungselemente zwischen den erwähnten Teilen, die bei herkömmlicher Bauweise notwendig sind, wegzulassen bzw. solche Teile nur gerade so voluminös zu bauen als dies funktionsnotwenig ist ohne aber irgendwelche Verbindungspartien, wie Nuten und Stege, vorsehen zu müssen.

Wie erwähnt wird bei der besagten Ausführungsform des Verfahrens grundsätzlich mindestens eine vorgesehene Dichtung im Zusammenhang mit der Zwei- oder Mehrkomponentenspritztechnik aufgebaut, gemeinsam mit einem weiteren, an die Dichtung unmittelbar angrenzenden Teil, so beispielsweise und vorzugsweise einem Gehäuseteil oder einem durch das Gehäuse durchragenden Bedienungsorgan oder einem weiteren Hörgeräteteil, das für sich besonderes akkurat zu dichten ist.

In einer weiteren Ausführungsform des Herstellungsverfahrens, insbesondere für Aussenohr-Hörgeräte, wird vorgeschlagen den akustischen Leiter ausgangsseitig des elektrisch-mechanischen Wandlers, welcher akustische Leiter üblicherweise als Kunststoffrohr ausgebildet ist, mit dem erwähnten Spritzgiessverfahren zu fertigen, sei dies gemeinsam direkt mit einer Gehäusepartie, oder sei dies z.B. mit einem elastischen formschlüssig dichtenden in eine Gehäuseaufnahme einzulegenden Montageteil.

In einer weiteren Ausführungsform des erwähnten Verfahrens wird vorgeschlagen einen akustischen Leiter eingangsseitig des akustisch-elektrischen Hörgeräte-Wandlers, in der erwähnten Spritzgiesstechnik zu fertigen, sei dies, beispielsweise wiederum gemeinsam mit einer Partie des Hörgeräte-Gehäuses oder mit einem spezifisch ausgelegten, beispielsweise dichtenden, elastischen Montageteil. In weiteren Ausführungsformen des Verfahrens, die selbstverständlich je einzeln oder in Kombination mit weiteren, Ausführungsformen einsetzbar sind, werden Aufnahmen für Hörgeräte-Komponenten bzw. -Teile im erwähnten Spritzgiessverfahren gefertigt, sei dies, gemeinsam mit Gehäuse-Partien und/oder gemeinsam mit weiteren, unmittelbar an sie angrenzenden Bauteilen.

In einer weiteren, bevorzugten Ausführungsform werden auf der Aussenseite des Gehäuses vorgegebene Flächenbereiche gemeinsam mit dem Gehäuse - aber aus anderem Material - im erwähnten Spritzgiessverfahren gefertigt, z.B. aus Designgründen und/oder um das Ertasten am Gehäuse angeordneter Bedienungsorgane allein mit den Fingern, zu erleichtern.

Das beanspruchte Hörgerät zeichnet sich nach dem Kennzeichen von Anspruch 1 aus, weitere Ausführungsformen sind in den Ansprüchen 2 und 3 angegeben. Die weiteren Ansprüche geben entsprechende Verfahren und Verwendungen an.

Die Erfindung wird anschliessend beispielsweise anhand von Figuren erläutert. Es zeigen:
Fig. 1 schematisch eine Partie eines Hörgeräte-Gehäuses in perspektivischer Darstellung mit angebauter Dichtung.
Fig. 2 ein Querschnitt durch einen Teil des Gehäuses nach Fig. 1 mit der aufgebauten Dichtung.
Fig. 3 einen Querschnitt durch die Gehäusewandung eines nach herkömmlichem Vorgehen aufgebauten Hörgerätes mit assemblierter Dichtung.
Fig. 4 schematisch einen Querschnitt durch einen Teil eines Hörgeräte-Gehäuses mit angebautem akustischem Leiter und/oder Aufnahme für ein Modul.
Fig. 5 schematisch einen Querschnitt durch einen Gehäusewandungsabschnitt mit Bedienungseinheit und aufgebauter Durchführung und Einheitshalterung.
Fig. 6 schematisch und prinzipiell das Verbinden zweier Hörgerät-Funktionseinheiten.

Bereits die im Rahmen der Beschreibungseinleitung gegebenen Ausführungen eröffnen dem Fachmann ohne weiteres, je nach zu konzipierendem Hörgerät bzw. dessen Aufbau eine grosse Zahl Möglichkeiten, durch vereintes Verarbeiten im Zwei-oder Mehrkomponenten-Spritzgiessverfahren, insbesondere auch durch Overmoulding, zwei oder mehr der vorzusehenden Bauteile platzsparend vereint zu fertigen, und dann gemeinsam als ein integraler Teil zu assemblieren. Trotzdem sollen nachfolgend anhand einiger schematischer Beispiele, Einsatzweisen des erwähnten Spritzgiessverfahrens erläutert werden. Auf die eigentliche Technik der Zwei- oder Mehrkomponenten-Spritzgiessverfahren wird nicht eingegangen, denn diese ist, wie erwähnt, aus dem generellen Komponentenbau, insbesondere aus der Kunststoffpress- und Spritzgiesstechnik hinlänglichst bekannt.

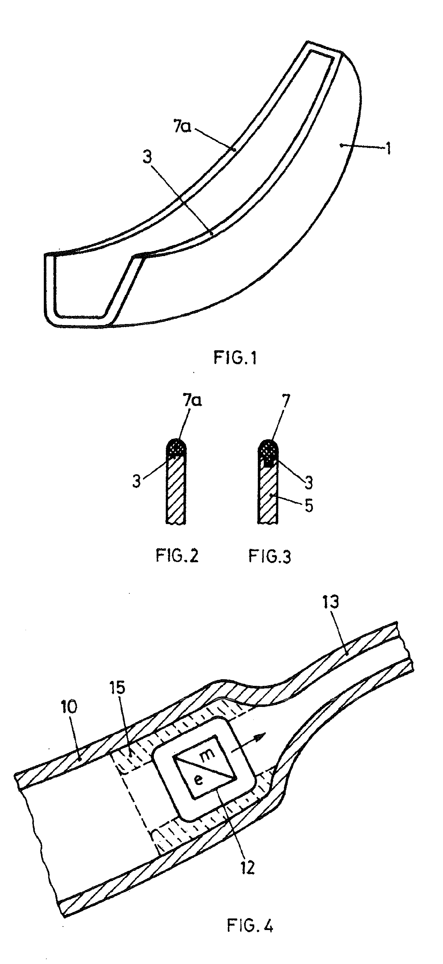

In Fig. 1 ist schematisch und perspektivisch die Schale 1 eines Hörgeräte-Gehäuses, beispielsweise eines Aussenohr-Hörgerätes, dargestellt. Entlang ihrer Stirnflächen 3 soll sie mit weiteren Gehäusepartien so assembliert werden, dass ihr Innenraum entlang dieser Stirnflächen 3 dicht verschlossen wird. Herkömmlicherweise wird dies dadurch gelöst, dass gemäss Figur 3 im Bereich der Stirnflächen 3 Positionierungs- und Halterungsvorkehrungen, wie dargestellt beispielsweise Nuten in die Wandung der Gehäusepartie 1 eingearbeitet werden, in welche nochmals, manuell, eine Dichtung 7 montiert wird.

An der erwähnten Gehäuseschale 1 bzw. der Stirnfläche 3 wird direkt, durch Zweikomponenten-Overmoulding-Spritzgiessverfahren eine Dichtung 7a aufgespritzt. Dabei genügt das Material der eigentlichen Gehäuseteilwandung den an das Gehäuse bezüglich Stabilität etc. zu stellenden Anforderungen, während das Material der im Overmoulding aufgespritzten Zweitkomponente den an die Dichtung 7a zu stellenden Anforderungen genügt. Die Dichtungspartie 7a kann dabei exakt so dimensioniert werden, wie es den Dichtungsanforderungen entspricht, ebenso kann die Wandung der Gehäusepartie 1 ausschliesslich auf Kriterien hin, die an das Gehäuse zu stellen sind, dimensioniert und geformt werden. Eine Ausbildung der Gehäusewand, welche zusätzlich der Assemblierung einer getrennten Dichtung 7, gemäss Fig. 3, genügt, entfällt.

In Fig. 4 ist schematisch dargestellt, wie beispielsweise an einem Hörgeräte-Gehäuse 10 einerseits, ein akustischer Leiter 13 angebaut wird, z.B. ausgangsseitig eines im Hörgerät montierten, elektro-mechanischen Wandlers oder, in Analogie, eingangsseitig eines am Hörgerät vorgesehenen akustisch-elektrischen Wandlers (nicht dargestellt). Zusätzlich kann für die Wandlereinheit 12 im Gehäuse 10 ein elastischer, federnder Aufnahmeblock 15 integriert sein. Gehäuse 10 und akustischer Leiter 13 und/oder Gehäuse 10 und Aufnahmeblock 15 oder alle drei, Gehäuse 10, Aufnahmeblock 15 und akustischer Leiter 13 werden als ein Teil in einem Zwei- oder Dreikomponenten-Spritzgiessverfahren gefertigt. Dabei wird als Material des Gehäuses 10 bzw. dessen Wandung in üblicher Art und Weise ein Material gewählt, das den an das Gehäuse zu stellenden Anforderungen genügt, als Material für den akustischen Leiter 13 z.B. ein Material, welches, wie beispielsweise für das Aussenohrgerät, biokompatibel ist, und es wird als Material für den Aufnahmeblock 15 ein Material gewählt, das bezüglich Schlag- und Schockdämpfung und Halterung des Wandlers 12 den diesbezüglich zu stellenden Anforderungen genügt. Es ist dabei auch ohne weiteres möglich, beispielsweise das Material des Blockes 15 elektrisch leitend zu wählen, soll beispielsweise der Wandler 12 elektrisch geschirmt werden.

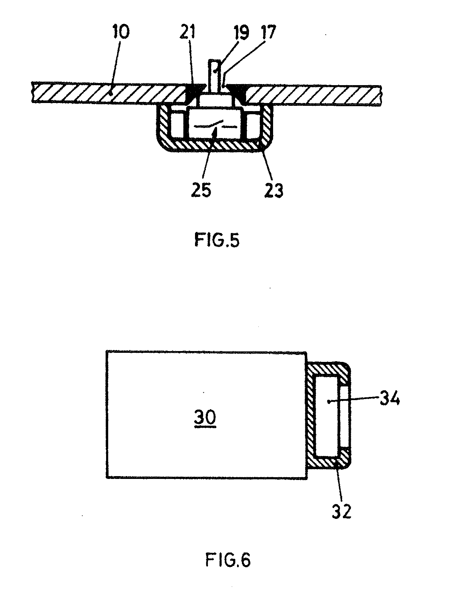

Wiederum schematisch ist in Fig. 5 ein erster Teil, beispielsweise wiederum eine Wandung einer Gehäusepartie 10 dargestellt, mit einer Durchführungsöffnung 17, durch welche ein Bedienungsorgan 19, wie ein Schalter ein Bedienungselement 25 des Hörgerätes, durchragt. Dadurch dass im Umrandungsbereich der Durchführungsöffnung 17 für das Bedienungsorgan 19, im Zwei- oder Mehrkomponenten-Spritzgiessverfahren, gemeinsam mit dem Gehäuseteil 10, elastische gegebenenfalls dichtende Partien 21 angespritzt werden, und gegebenenfalls zusätzlich auch eine Aufnahme 23 für federnde, satte Fixierung der Einheit 25 wird ein optimal platzsparender Einbau der Einheit 25 ermöglicht.

In Fig. 6 ist dargestellt wie am Gehäuse 30 eines Aggregates 34, beispielsweise eines Elektronikmoduls des Hörgerätes eine Aufnahme 32 zur entsprechenden Positionierung und Halterung eines weiteren Aggregates 34 mit dem erwähnten Zwei- oder Mehrkomponenten-Spritzgiessverfahren angebaut wird, womit wiederum eine optimal kleinbauende Assemblierung mit hoher Packungsdichte ermöglicht wird.

Aufgrund des erfindungsgemässen Herstellungsverfahrens werden grosse Einsparungen beim Assemblieren erreicht: Es werden Assemblierungs-Schritte durch die integrale Zwei-oder Mehrteil-Herstellung eingespart. Weiter wird der gerade für Hörgeräte äusserst wichtige Vorteil erwirkt, dass funktionell unterschiedliche Teile, die nach Assemblierung ohnehin aneinander zu liegen kommen, gezielt mit den jeweils notwendigen Materialeigenschaften ausgelegt werden können, aber trotzdem als ein integraler Teil. Dadurch entfallen Bauvolumen konsumierende Massnahmen zur nachhaltigen Assemblierung dieser Teile. Nimmt man hierfür als Beispiel die in den Fig. 1 bis 3 dargestellte Ausführungsform so ist ersichtlich, dass eine Dichtung 7a die nur gerade den Dichtungsanforderungen genügen muss, wesentlich kleiner und dünner gefertigt werden kann, wenn sie am Teil 1 integral angeformt ist, als wenn sie separat als Dichtung 7 gefertigt und darnach, beispielsweise manuell, an die entsprechenden Stirnflächen des Teiles 1 montiert werden muss, sei dies durch Kleben, Stecken oder dgl. Die Präzision mit welcher die Dichtungspartie 7a unmittelbar an die die Stirnfläche 3 bildende Wand des Teiles 1 angebaut werden kann, ist mit gleicher Dimensionierung durch Assemblieren getrennter Teile kaum möglich oder nur mit hohem Aufwand.

## Patentansprüche

1. Hörgerät aus mehreren Teilen nachhaltig assembliert, **dadurch gekennzeichnet, dass** mindestens zwei der Teile aus unterschiedlichen Materialien durch Zwei- oder Mehrkomponenten-Spritzgiesstechnik gemeinsam gefertigt sind.

2. Hörgerät gemäss Anspruch 1, **dadurch gekennzeichnet, dass** das Hörgerät ein Hörgerät mit einem Gehäuse und mit auf der Aussenseite des Gehäuses vorgegebenen Flächenbereichen ist, wobei ein erstes der mindestens zwei Teile das Gehäuse ist und weitere der mindestens zwei Teile die Flächenbereiche sind.

3. Hörgerät gemäss Anspruch 2, **dadurch gekennzeichnet, dass** das Gehäuse und die Flächenbereiche in der genannten Spritzgiesstechnik so gefertigt sind, dass **dadurch** ein Ertasten am Gehäuse angeordneter Bedienungsorgane allein mit den Fingern erleichtert wird.

4. Verfahren zur Herstellung eines aus mehreren Teilen nachhaltig assemblierten Hörgerätes, **dadurch gekennzeichnet, dass** mindestens zwei der Teile aus unterschiedlichen Materialien durch Zwei- oder Mehrkomponenten-Spritzgiesstechnik gemeinsam gefertigt werden.

5. Verfahren gemäss Anspruch 4, **dadurch gekennzeichnet, dass** das Hörgerät ein Hörgerät mit einem Gehäuse und mit auf der Aussenseite des Gehäuses vorgegebenen Flächenbereichen ist, wobei ein erstes der mindestens zwei Teile das Gehäuse ist und weitere der mindestens zwei Teile die Flächenbereiche sind.

6. Verfahren gemäss Anspruch 5, **dadurch gekennzeichnet, dass** das Gehäuse und die Flächenbereiche in der genannten Spritzgiesstechnik so gefertigt sind, dass **dadurch** ein Ertasten am Gehäuse angeordneter Bedienungsorgane allein mit den Fingern erleichtert wird.

7. Verwendung eines Zwei- oder Mehrkomponenten-Spritzgiessverfahrens zur Einsparung mindestens eines Assemblierungsschrittes bei einem Verfahren zur Herstellung von Hörgeräten, indem mindestens zwei Hörgeräteteile aus unterschiedlichen Materialien **dadurch** erstellt und nachhaltig assembliert werden, dass sie aus unterschiedlichen Materialkomponenten durch Zwei- oder Mehrkomponenten-Spritzgiesstechnik bereits vereint erstellt und **dadurch** assembliert werden.

8. Verwendung nach Anspruch 7, **dadurch gekennzeichnet, dass** das Hörgerät ein Hörgerät mit einem Gehäuse und mit auf der Aussenseite des Gehäuses vorgegebenen Flächenbereichen ist, wobei ein erstes der mindestens zwei Teile das Gehäuse ist und weitere der mindestens zwei Teile die Flächenbereiche sind.

9. Verwendung gemäss Anspruch 8, **dadurch gekennzeichnet, dass** das Gehäuse und die Flächenbereiche in der genannten Spritzgiesstechnik so gefertigt sind, dass **dadurch** ein Ertasten am Gehäuse angeordneter Bedienungsorgane allein mit den Fingern erleichtert wird.
